# EUROPÄISCHE PATENTSCHRIFT

(11) **EP 4 381 243 B1**
(45) Veröffentlichungstag und Bekanntmachung des Hinweises auf die Patenterteilung: **30.04.2025**
(21) Anmeldenummer: 22741270.7
(22) Anmeldetag: 08.07.2022
(51) Int. Cl.: G01B 11/24

(54) **VERFAHREN ZUR OPTISCHEN VERMESSUNG EINES GEWINDES AN EINEM ENDE EINES METALLROHRES ODER AN EINER MUFFE**
METHOD OF OPTICAL MEASUREMENT OF A THREAD ON AN END OF A METAL PIPE OR ON A SLEEVE
PROCÉDÉ DE MESURE OPTIQUE D'UN FILETAGE À UNE EXTRÉMITÉ D'UN TUBE MÉTALLIQUE OU SUR UN MANCHON

(30) Priorität: 03.08.2021 DE 102021208378
(43) Veröffentlichungstag der Anmeldung: 12.06.2024
(73) Patentinhaber: SMS group GmbH, 41069 Mönchengladbach (DE)
(72) Erfinder: SAUERLAND, Martin, 41372 Niederkrüchten (DE); SCHMITZ, Jochen, 41849 Wassenberg (DE); HÖFER, Michael, 41372 Niederkrüchten (DE)
(74) Vertreter: Kross, Ulrich
(86) Internationale Anmeldenummer: PCT/EP2022/069127
(87) Internationale Veröffentlichungsnummer: WO 2023/011854

(56) Entgegenhaltungen:
- EP-A1- 2 887 010
- WO-A1-2016/000764
- WO-A1-2020/232041
- WO-A1-2021/055736
- JP-A- H10 142 335
- KR-B1- 101 368 486
- US-A1- 2015 292 872

## Beschreibung

Die Erfindung betrifft ein Verfahren zur optischen Vermessung eines Gewindes, insbesondere zur Vermessung eines Innengewindes an einem Muffenende eines Metallrohres oder in einer Muffe.

An Rohre, die für den Transport von unter Druck stehenden Fluiden dienen, wie beispielsweise Erdgas oder Erdöl, und die druckfest sowie gas- und flüssigkeitsdicht miteinander verschraubt werden, sind hohe Anforderungen an die Dichtigkeit zu stellen. Bei solchen OCTG Rohren als Futterrohre oder Steigrohre für Erdöl- oder Erdgas Explorationsbohrungen oder Erdgas oder Erdöl Förderleitungen finden üblicherweise konische Gewinde mit hinterschnittenen Gewindeflanken Anwendung. An die Gewinde schließt sich in der Regel stirnseitig des Rohres eine Dichtlippe an. Sowohl das Gewinde als auch die Dichtlippe müssen höchsten Präzisionsanforderungen genügen. Im Stand der Technik ist es grundsätzlich bekannt, die Gewinde zur Qualitätskontrolle der Rohre optisch zu vermessen.

Ein Verfahren sowie eine Vorrichtung zur optischen Vermessung des Außengewinde-Profils von Rohren ist beispielsweise aus der WO 2019/09371 A1 bekannt.

Aus der WO 2012/069154 A1 sind ein Verfahren und eine Vorrichtung zur Inspektion des Außengewindes eines Ölfeldrohres bekannt, die einen auf einem Gestell geführten Sensor umfasst, wobei der Sensor auf einem mit Gewinde versehenen Träger angeordnet ist, dessen Gewinde entsprechend dem Gewinde des Rohres ausgebildet ist und der einen Teil des konischen Gewindes des zu inspizierenden Rohres einfasst. Der Sensor ist als konfokaler Sensor ausgebildet.

Aus der WO 2020/232041 A1 ist ebenfalls eine Vorrichtung zur Vermessung von Gewinden an Ölfeldrohren bekannt. Die Vorrichtung umfasst eine Sensoreinheit, die dazu ausgebildet ist, einen Abstand zwischen dem Sensor und einem Teil des Gewindes des Metallrohres zu vermessen. Der Sensor bzw. die Sensoreinheit ist mit einer Vielzahl von Aktuatoren radial und axial bezüglich des Innengewindes des Metallrohres verstellbar, wobei eine Steuereinrichtung aus einer Vielzahl von Abstandsmessungen ein dreidimensionales Abbild des Innengewindes erzeugen kann. Die Sensoreinheit umfasst einen konfokalen chromatischen Sensor, der an einem Gestänge in das Metallrohr verbracht wird und dort mittels Tastrollen innerhalb des Metallrohres zentriert wird. Nach konzentrischer Ausrichtung der Führungsstange des Gestänges wird der Sensor innerhalb des Metallrohres sowohl translatorisch als auch rotatorisch verstellt, wobei das Gewinde abgetastet und mittels der so erhaltenen Messdaten ein dreidimensionales Abbild des Gewindes erzeugt wird.

Die aus der WO 2020/232041 A1 bekannte Anordnung ist nicht ohne weiteres für Rohre mit kleinem Innendurchmesser geeignet. Die taktile Zentrierung der Meßanordnung ist aufwendig und benötigt verhältnismäßig viel Bauraum. Das Sichtfeld des Sensors ist in einem vorgegebenen Winkel zur Längsachse des Metallrohres ausgerichtet und die Stange, an welcher der Sensor befestigt ist, ist mittels dreier verschiedener Aktuatoren betätigbar, wobei ein Aktuator für die Drehbewegung der Stange um ihre eigene Längsachse, ein Aktuator für eine Rotationsbewegung der Stange um die Längsachse des Metallrohres und ein Aktivator für eine Linearbewegung der Stange innerhalb des Metallrohres, d. h. parallel zur Längsachse des Metallrohres vorgesehen ist. Die Abtastung hinterschnittener und/oder konischer Gewinde ist mit dieser Anordnung schwierig. Es ist davon auszugehen, dass die vollständige Erfassung aller Abstandsinformationen zur Abbildung des Gewindes eine verhältnismäßig lange Meßzeit erfordert.

Eine Anordnung einer Anordnung zur optischen Vermessung von Bohrungen mit kleinem Innendurchmesser, umfassend wenigstens einen optischen Sensor, wenigstens ein weiteres optisches Element, das relativ zu dem optischen Sensor verstellbar ist und das mit einem bestimmten Abstand zu dem Sensor in einer optischen Achse angeordnet und zur optischen Abtastung des Innendurchmessers der Bohrung ausgebildet ist, ist beispielsweise aus der WO 2021/055736 A1 bekannt.

Weiterer Stand der Technik ist aus den Dokumenten KR 101 368 486 B1, US 2015/292872 A1, EP 2 887 010 A1, WO 2016/000764 A1 und JP H10 142335 A bekannt.

Der Erfindung liegt die Aufgabe zugrunde, ein Verfahren der eingangs genannten Art bereitzustellen, die eine optische Vermessung insbesondere hinterschnittener und/oder konischer Innengewinde an Muffen von Ölfeldrohren mit verhältnismäßig kurzer Meßzeit und großer Genauigkeit ermöglichen.

Die Aufgabe wird gelöst durch ein Verfahren mit den Merkmalen des Anspruchs 1.

Nach einem Gesichtspunkt der Erfindung umfasst das Verfahren gemäß der Erfindung die Verwendung einer Anordnung zur optischen Vermessung eines Gewindes an einem Ende eines Metallrohres, insbesondere zur Vermessung eines Innengewindes an einem Muffenende eines Metallrohres oder an einer Muffe bereitgestellt, umfassend wenigstens einen optischen Sensor, wenigstens ein weiteres optisches Element, das relativ zu dem optischen Sensor verstellbar ist und das mit einem bestimmten Abstand zu dem Sensor in einer optischen Achse auf einer optischen Bank angeordnet ist und zur optischen Abtastung des Innengewindes ausgebildet ist, sowie weiterhin umfassend Mittel zur Erfassung und/oder Speicherung und/oder Auswertung der von dem Sensor aufgenommenen Messdaten.

Durch die Kombination des Sensors mit wenigstens einem weiteren optischen Element lassen sich kleine Sensoren in abgewinkelter oder gerader Bauform verwenden. Besonders günstig ist es, wenn ein einziger Sensor in gerader Bauform vorgesehen ist, der beispielsweise in der optischen Achse des Systems ausgerichtet sein kann. Bei der Anordnung gemäß der Erfindung bilden der Sensor und das weitere optische Element ein System.

Bei der Anordnung gemäß der Erfindung ist vorgesehen, dass die optische Bank und/oder das Gestell wenigstens linear in der Längsachse oder parallel zu einer Längsachse des Metallrohres verstellbar sind.

Der Sensor ist als konfokaler Sensor, insbesondere als konfokaler chromatischer Sensor ausgebildet. Diese Sensoren sind klein. Durch die Kombination mit einem weiteren optischen Element kann dieser Sensor beispielsweise in gerader Bauform ausgebildet sein, wodurch die Anordnung kompakt wird und auch Innengewinde mit einem kleinen Innendurchmesser messbar sind.

Der Sensor kann beispielsweise als konfokaler Wegmesssensor ausgebildet sein. Bei einem konfokalen-chromatischen Messsystem wird weißes Licht über ein Linsensystem in seine Teil Wellenlängen derart zerlegt, dass jede Wellenlänge in einem anderen definierten Abstand fokussiert. Blaue Wellenzüge werden nahe am Sensor, rote weiter entfernt zum Sensor fokussiert. Das reflektierte Licht wird gesammelt und interferometrisch analysiert. Die Farbe höchster Intensität entspricht dabei dem jeweiligen Fokus und damit dem Abstand des Sensors zum Messpunkt. Durch die Erfassung einer Vielzahl von Punkten bzw. Abständen lässt sich in einfacher Art und Weise ein Gewindeprofil des zu vermessenden Gewindes erzeugen. Ein solches Gewindeprofil kann zweidimensional oder auch dreidimensional erfasst und dargestellt werden.

Bei der Anordnung gemäß der Erfindung ist vorgesehen, dass das optische Element einen um wenigstens eine Achse verstellbaren Spiegel umfasst.

Bei der Anordnung gemäß der Erfindung kann vorgesehen sein, dass das optische Element wenigstens einen, vorzugsweise zwei Aktuatoren umfasst, mit denen der Spiegel jeweils um die eine oder andere Achse schwenkbar ist. Der Spiegel kann beispielsweise doppelt kardanisch aufgehängt sein, wobei die Kardanrahmen jeweils mittels magnetischer Aktuatoren verstellbar sein können.

Bei der Anordnung gemäß der Erfindung ist das optische Element als sogenannter Galvo-Scanner ausgebildet, dessen Spiegel relativ zu der optischen Achse drehbar und schwenkbar ausgebildet ist, sodass wenigstens ein Teilumfang des Innengewindes des Metallrohres optisch gescannt werden kann. Das von dem Spiegel des optischen Elements erfasste Signal wird in der optischen Achse der Anordnung an den Sensor übertragen.

Der Sensor umfasst zweckmäßigerweise ein Linsensystem und eine Steuereinrichtung, die die Signale des Linsensystems interferometrisch auswertet. Der Sensor kann beispielsweise mittels einer geeigneten Verkabelung, beispielsweise mittels Glasfaserkabel, mit der Steuereinrichtung verbunden sein.

Zweckmäßigerweise ist die optische Bank und/oder das Gestell mittels wenigstens eines Linearantriebs verstellbar.

Die Anordnung kann weiterhin Mittel zur Zentrierung der optischen Bank innerhalb des Metallrohres umfassen, die berührungslos arbeiten. Die Signalerfassung und Signalverarbeitung kann sowohl einkanalig als auch mehrkanalig erfolgen.

Wenn die Anordnung wenigstens einen um 90° abgewinkelten Sensor umfasst, kann mittels dieses Sensors eine Innenzentrierung der Anordnung innerhalb des Metallrohres bewerkstelligt werden.

Das Verfahren zur optischen Vermessung eines Gewindes an einem Ende eines Metallrohres, insbesondere das Verfahren zur Vermessung eines Innengewindes an einem Muffenende eines Metallrohres oder an einer Muffe, umfasst folgende Schritte:
A) Bereitstellen eines optischen Systems mit wenigstens einem optischen Sensor und wenigstens einem weiteren optischen Element, die in einer optischen Achse mit einem bestimmten Abstand zueinander angeordnet sind,
B) Verstellen des optischen Systems in der Längsachse des Metallrohres oder parallel zur Längsachse des Metallrohres, vorzugsweise innerhalb des Metallrohres, oder Verstellen des Metallrohres relativ zu dem ortsfest angeordneten System in der Längsachse oder parallel zu der Längsachse des Metallrohres und
C) Abtasten des Innengewindes während einer Linearverstellung des optischen Systems und/oder während einer Drehung des optischen Elements in einem Winkel zu der optischen Achse und
D) Erfassen und/oder Speichern und/oder Verarbeiten der von dem Sensor erfassten Messwerte. Bei dem Verfahren gemäß der Erfindung können mit einer einzigen Messfahrt zwei Innengewinde eines Metallrohres oder die beiden gegenüberliegenden Innengewinde einer Muffe vermessen werden.

Das Gewinde kann über seine Länge und/oder über wenigstens einen Teilumfang von dem Sensor abgetastet werden, wobei der Sensor vorzugsweise Abstandswerte erfasst, die in ein zwei- oder dreidimensionales Messbild umgesetzt werden und die entsprechend zwei -oder dreidimensional dargestellt werden.

Der optische Sensor umfasst vorzugsweise einen optisch passiven Sensor, der ein Linsensystem und eine Steuereinrichtung umfasst. Vorzugsweise werden die von dem Sensor empfangenen Messsignale der Steuereinrichtung zugeführt, die eine interferometrische Auswertung der Messsignale durchführt. Die Daten der Steuereinrichtung können über eine Schnittstelle an eine Recheneinheit, beispielsweise in Form eines Computers (PC), weitergegeben werden.

Bei dem Verfahren gemäß der Erfindung ist vorgesehen, dass der optische Sensor und das weitere optische Element, beispielsweise in Form eines Spiegels, eine optische Achse bilden. Während beispielsweise einer Linearverstellung des optischen Sensors kann das optische Element um wenigstens eine, vorzugsweise zwei vorzugsweise senkrecht zueinander ausgerichtete Achsen verstellbar sein, sodass während einer Messfahrt des optischen Systems das vollständige Gewinde abgetastet werden kann. Hierzu sind vorzugsweise der optische Sensor und das weitere optische Element relativ zueinander verstellbar in der optischen Achse angeordnet.

Das optische System umfasst wenigstens einen Galvo-Scanner-Scanner, der während einer Linearverstellung des optischen Systems wenigstens einen Teilumfang des Innengewindes abtastet.

Dabei wird vorzugsweise die Kontur der Gewindegänge zweidimensional und/oder dreidimensional erfasst und/oder dargestellt.

Bei einer besonders zweckmäßigen Variante des Verfahrens ist eine Selbstzentrierung der optischen Achse des optischen Systems innerhalb des Metallrohres oder innerhalb der Muffe vorgesehen. Bei einer Messfahrt kann vorgesehen sein, dass entweder das optische System ortsfest angeordnet ist und die Muffe oder das Muffenende über dem System verfahren wird oder dass das Metallrohr oder die Muffe ortsfest angeordnet ist und dass die Messsensorik bzw. das optische System relativ zur Längsachse des ortsfest angeordneten Metallrohres oder der ortsfest angeordneten Muffe verstellt wird.

Bei einer vorteilhaften und zweckmäßigen Variante des Verfahrens gemäß der Erfindung ist ein Dunkelabgleich bzw. eine Dunkelkalibrierung des Sensors vorgesehen. Der Dunkelabgleich kann beispielsweise durch Einfahren in ein abgedunkeltes Gehäuse automatisiert erfolgen.

Weiterhin kann eine Sensorkalibrierung mit einem Referenzbauteil vorgesehen sein, das bekannte Abmessungen und ein bekanntes Gewindeprofil aufweist. Weiterhin kann zusätzlich durch Vergleich mit abgelegten Referenzwerten der Lichtsignalstärke eine Verschmutzung des optischen Systems erkannt werden.

Bei einer besonders vorteilhaften Variante des Verfahrens gemäß der Erfindung ist vorgesehen, dass die von dem Sensor erfassten Messdaten zur Ableitung von Steuerbefehlen für die Steuerung und/oder Regelung einer Werkzeugmaschine, beispielsweise einer CNC Maschine, verwendet werden, die zur Herstellung eines Innengewindes an wenigstens einem Ende eines Metallrohres oder in einer Muffe durch spanende Bearbeitung ausgebildet ist. Die Anordnung kann beispielsweise in einer Fertigungslinie mit einer Gewindeschneidanlage angeordnet sein und mit der Steuerung- und Regeleinrichtung der Gewindeschneidanlage gekoppelt sein.

Optische Steuerbefehle können beispielsweise die folgenden sein:
- Verschleißerkennung der Werkzeuge und abgeleiteter Aufruf zum Werkzeugwechsel
- Nachstellen der Werkzeugposition bei z.B. falschen Einstellparametern oder zur Verschleißkompensation von Werkzeugen
- Korrektur der Werkzeuge auf Grund geometrischer Anordnung der Schneidplatten (z.B. wenn nach dem Werkzeugwechsel eine Stufe erkennbar ist)
- Korrektur der Werkzeuge auf Grund von Verschleiß (z.B. wenn die Schneidplatten anfangen zu schmieren)
- Korrektur der Werkzeuge auf Grund von äußeren Einflüssen (z.B. wenn sich die Umgebungstemperatur ändert)
- Korrektur der Werkzeuge auf Grund von anderen Rohlingen (z.B. wenn das Material des Rohres ein anderes wird oder die Wandstärke größer oder kleiner wird)
- Verschleißerkennung der Werkzeuge, um die Standzeit zu optimieren (z.B. wenn man Schnittgeschwindigkeit, Schneidengeometrie, Vorschübe und Messergebnis aufeinander abstimmen)
- Verschleißerkennung der Werkzeuge, um Werkzeugbruch vorherzusagen Verschleißerkennung der Werkzeuge, um Werkzeugbestand zu optimieren
- Verschleißerkennung der Werkzeuge, um die Produktivität zu erhöhen (z.B. in dem man die Werkzeuge frühzeitig austauscht und weniger Schrott produziert)
- Erhöhung der Produktivität durch Taktzeitoptimierung (z.B. kann man erkennen ob verschiedene Funktionen den gehofften Mehrwert bringen)
- Erhöhung der Produktivität durch Verbesserung des Materialflusses (z.B. kann man Bottlenecks an anderen Stellen früher erkennen und dann Werkzeuge wechseln oder Reinigungsarbeiten durchführen)
- Erhöhung der Qualität durch frühzeitige Problemerkennung (z.B. wenn man bestimmte Schwingungen in der Gewindeschneidmaschine misst und diese dann im Prozess unterbindet, Lynette schließt oder Fertigschnitt wiederholt)
- Erhöhung der Qualität durch Vergleich der Messergebnisse mit Drehmoment am Muffenaufschrauber.
- Erhöhung der Qualität durch Vergleich der Messergebnisse mit den Messergebnissen anderer Maschinen (NDT (non-destructive testing): hier Magnetpulverprüfung)

Die gesammelten Daten können außerdem zur Qualitätsauswertung und - dokumentation sowie für nachgeschaltete Prozesse verwendet werden und mit den Daten dieser Maschinen mittels z.B. entsprechender Regelalgorithmen oder KI korreliert werden. Diese nachgeschalteten Prozesse und Korrelationen können sein:
- Erkennung von Verschmutzung der Muffe und Unterscheidung zu Fehlern
- Korrelation der Messdaten mit vorherigen gesammelten Daten, um z.B. zu detektieren wo Spannungen in der Muffe herkommen, welche zu einer Ovalität nach dem Gewindeschneiden führen. So evtl. Verbesserung der Abschreckstrategie
- Erhöhung der Qualität durch Vergleich der Messergebnisse mit Drehmoment am Muffenaufschrauber
- Erhöhung der Qualität durch Vergleich der Messergebnisse mit den Messergebnissen anderer Maschinen (NDT: hier Magnetpulverprüfung)

Weiterhin kann das Messgerät über einen mechanischen und/oder optischen Kollisionsschutz verfügen.

Zur Erfassung besonderer Gewindekonturzonen (z.B. Hinterschnittkontur) kann der Sensor an bestimmten Stellen innerhalb des Innengewindes positioniert und mit dem Galvo-Scanner kann ein Teilbereich abgetastet werden.

Erfindungsgemäß ist eine Mehrfachfahrt durch das Gewinde mit verschiedenen Abwinklungen des Lichtes durch den Galvo-Spiegel (z.B. 90° Abwinklung, dann 100°, danach 110° oder auch 70° oder 80°) und eine Überlagerung der Kurven der Messsignale vorgesehen. Ziel ist es, jede Gewindekonturzone mit ausreichend starkem Lichtsignal zu messen.

Obwohl die Erfindung gemäß Anspruch 1 auf die Vermessung von Innengewinden abstellt, ist für den Fachmann erkennbar, dass zusätzlich auch die Vermessung von Außengewinden vorgesehen sein kann.

Die Erfindung wird nachstehend unter Bezugnahme auf die beigefügten Zeichnungen anhand eines Ausführungsbeispiels erläutert.

Es zeigen:
- Figur 1: eine schematische Darstellung der Anordnung gemäß der Erfindung,
- Figur 2: das weitere optische Element der Anordnung gemäß der Erfindung als sogenannter Galvo-Scanner,
- Figur 3: eine Darstellung, die die Anordnung des optischen Elements und des Sensors zueinander veranschaulicht,
- Figur 4: ein zweidimensionales Gewindeprofil, das aufgrund der Messdaten der Anordnung erstellt wurde und
- Figur 5: eine schematische Darstellung der Anordnung in Bezug auf ein Muffenende eines Metallrohres.

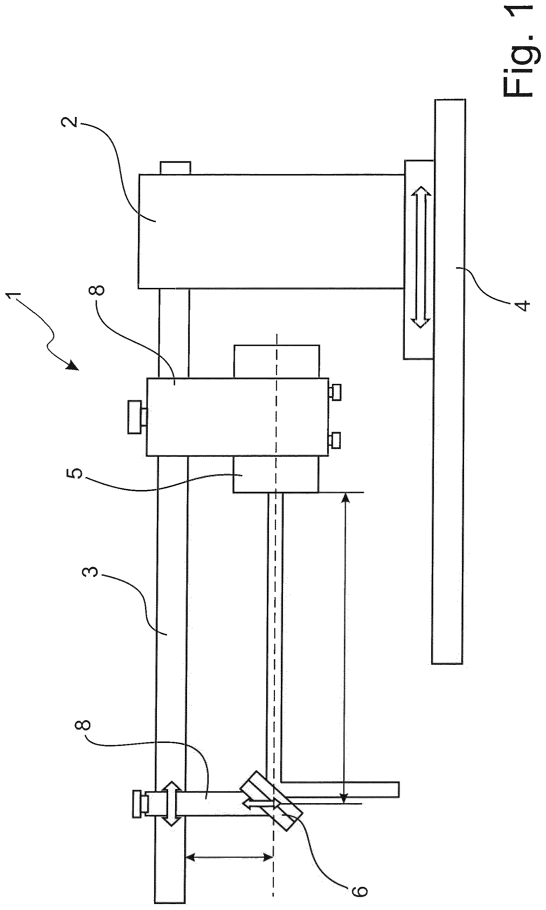

Die in Figur 1 dargestellte Anordnung 1 stellt einen Testaufbau dar und umfasst ein Gestell 2 mit einer optischen Bank 3, welches auf einer Fahrschiene 4 linear verstellbar ist. Auf der optischen Bank 3 sind ein chromatisch konfokaler Sensor 5 und ein optisches Element in Form eines Galvo-Scanners 6 in einer optischen Achse 7 angeordnet. Der Galvo-Scanner 6 ist als Spiegel 9 ausgebildet, der doppelt kardanisch gelagert ist und in Kardanelementen 10 um zwei senkrecht zueinander ausgerichtete Achsen mittels Aktuatoren verstellbar ist. Der Galvo-Scanner 6 und der optische Sensor 5 sind jeweils an Haltern 8 verstellbar auf der optischen Bank 3 angeordnet. Die Verstellbarkeit des Galvo-Scanner 6 und des optischen Sensors 5 dient zum Zwecke der Justierung. Während einer Messfahrt kann der Abstand des optischen Sensors 5 zu dem Galvo-Scanner 6 in der optischen Achse 7 festgelegt und konstant sein. Zweckmäßigerweise sind sowohl der Halter 8 für den Galvo-Scanner 6 als auch der Halter 8 für den optischen Sensor in ihrer Höhe verstellbar im Sinne einer Justierbarkeit senkrecht zur optischen Achse 7.

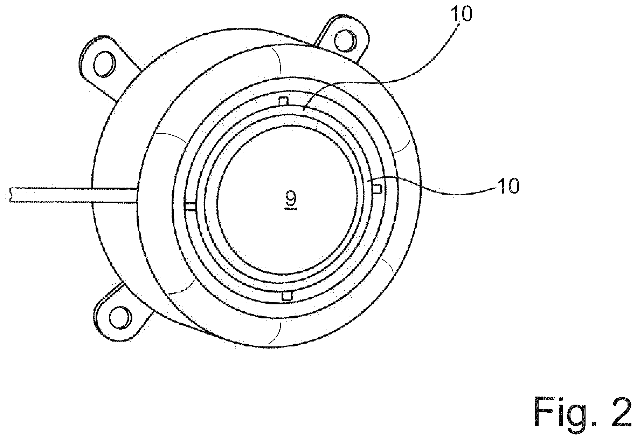

Der Galvo-Scanner 6 ist schematisch in Figur 2 dargestellt, aus der erkennbar ist, dass dieser einen kreisrunden Spiegel 9 mit einem verhältnismäßig kleinen Durchmesser aufweist, der in zwei Kardanelementen 10 schwenkbar gelagert ist.

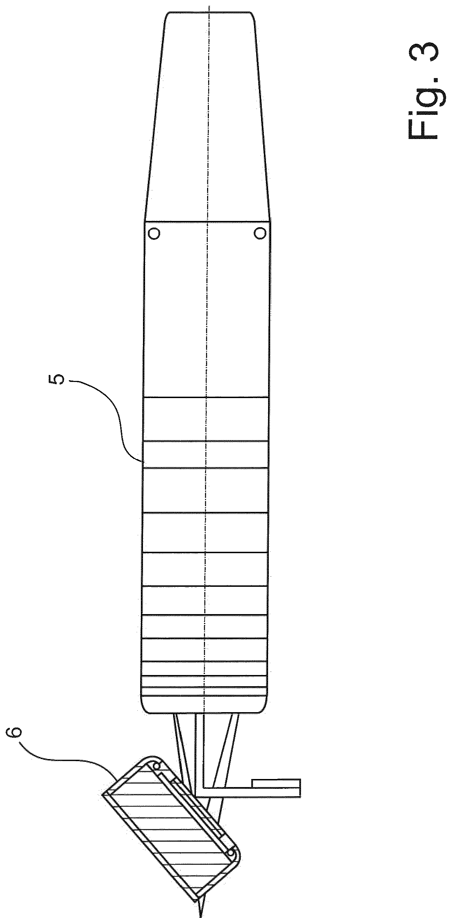

Figur 3 zeigt die relative Anordnung des optischen Sensors 5 und des Galvo-Scanner 6 in der optischen Achse 7 des Systems.

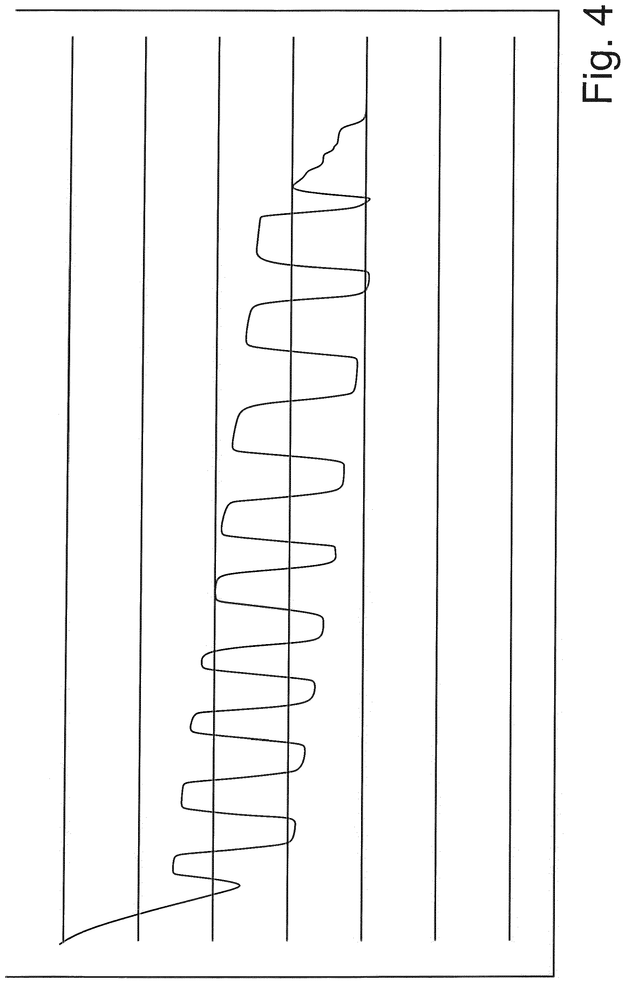

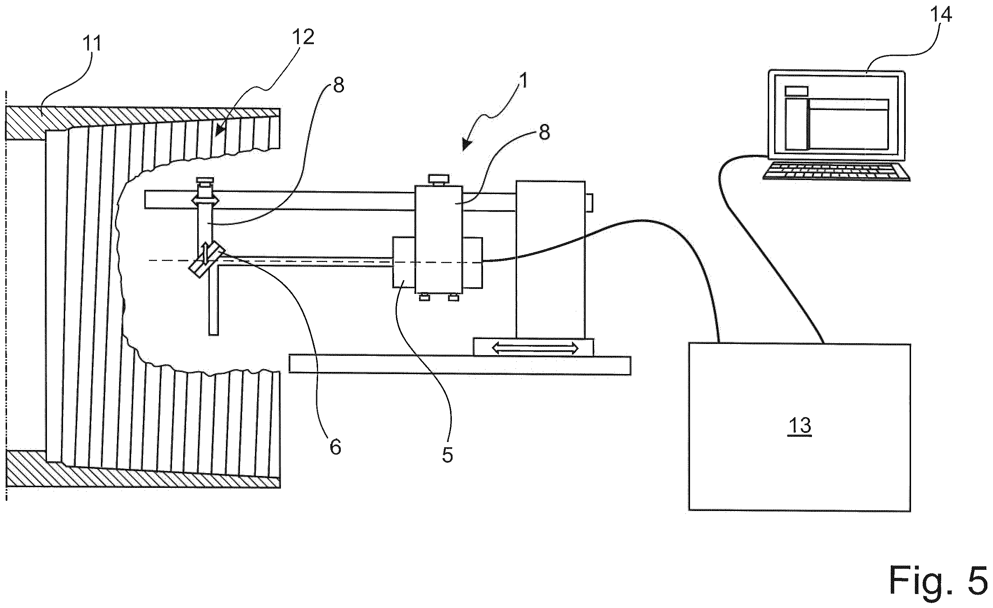

Figur 4 zeigt einen zweidimensionalen Messschrieb einer Aufzeichnung, die aus einer Messfahrt entlang der Längsachse eines Metallrohres 11 (siehe Figur 5) erhalten wurde.

Wie dies aus Figur 5 ersichtlich ist, kann beispielsweise das Metallrohr 11 mit einem Innengewinde 12 ortsfest in einem nicht dargestellten Messstand angeordnet sein, während die optische Bank 3 auf der Fahrschiene 4 in das Innere des Metallrohres 11 verfahren wird und Messdaten des Innengewindes 12 während einer Linearbewegung der optischen Bank 3 aufzeichnet. Dabei kann der Spiegel 9 des Galvo-Scanners jeweils in einem bestimmten Winkel zur optischen Achse 7 ausgerichtet sein. Alternativ oder zusätzlich kann vorgesehen sein, den Spiegel 9 während einer Messfahrt relativ zur Längsachse des Metallrohres 11 zu verstellen, um eine Abtastung eines Teilumfangs des Innengewindes 12 durchzuführen.

Obwohl sich das vorstehend beschriebene Beispiel auf ein Metallrohr 11 mit einem Muffenende bezieht, ist die Erfindung so zu verstehen, dass das Verfahren auch an einer Muffe mit zwei gegenüberliegend angeordneten Innengewinden durchgeführt werden kann.

Auch ist ohne weiteres für den Fachmann erkennbar, dass das Verfahren auch an einem Außengewinde durchgeführt werden kann.

Wie aus der Kombination der Figuren 4 und 5 erkennbar ist, ist das Innengewinde 12 als konisches Innengewinde mit hinterschnittenen Gewindeflanken ausgeführt.

Die von der Anordnung 1 bzw. von dem optischen Sensor 5 erfassten Messdaten werden der mit 13 bezeichneten Steuereinrichtung zugeführt, die eine interferometrische Auswertung der optischen Signale vornimmt. Die Steuereinrichtung 13 gibt die ausgewerteten Abstandsdaten an eine auf einem Computer 14 betriebene Software zwecks Darstellung eines zwei- oder dreidimensionalen Profils weiter. Auf dem Computer 14 kann ein digitaler Zwilling des zu vermessenden Metallrohres 11 abgebildet sein.

### Bezugszeichenliste

- 1: Anordnung
- 2: Gestell
- 3: optische Bank
- 4: Fahrschiene
- 5: optischer Sensor
- 6: Galvo-Scanner
- 7: optische Achse
- 8: Halter
- 9: Spiegel
- 10: Kardanelemente
- 11: Metallrohre
- 12: Innengewinde
- 13: Steuereinrichtung
- 14: Computer

## Patentansprüche

1. Verfahren zur optischen Vermessung eines Innengewindes (12) an einer Muffe oder an einem Muffenende eines Metallrohres (11), wobei das Verfahren folgende Schritte umfasst:
A) Bereitstellen eines optischen Systems mit wenigstens einem optischen Sensor (5) und wenigstens einem weiteren optischen Element, die in einer optischen Achse (7) mit einem bestimmten Abstand zueinander angeordnet sind,
B) Verstellen des optischen Systems in der Längsachse des Metallrohres (11) oder der Muffe oder parallel zur Längsachse des Metallrohres (11) oder der Muffe, vorzugsweise innerhalb des Metallrohres (11), oder Verstellen des Metallrohres (11) relativ zu dem ortsfest angeordneten System in der Längsachse oder parallel zu der Längsachse des Metallrohres (11) oder der Muffe und
C) Abtasten des Innengewindes (12) während einer Linearverstellung des optischen Systems und/oder während einer Drehung des optischen Elements in einem Winkel zu der optischen Achse (7) und
D) Erfassen und/oder Speichern und/oder Verarbeiten der von dem Sensor erfassten Messwerte
**dadurch gekennzeichnet,**
**dass** das optische System wenigstens einen Galvo-Scanner (6) umfasst, der während einer Linearverstellung des optischen Systems wenigstens einen Teilumfang des Innengewindes 12) abtastet und dass eine mehrfache Abtastung des Innengwindes mit verschiedenen Abwinkelungen des Lichts durch den Galvo-Scanner vorgesehen ist und dass die Signale mehrerer Abtastungen überlagert werden.

2. Verfahren nach Anspruch 1, **dadurch gekennzeichnet, dass** die Kontur der Gewindegänge erfasst und/oder dargestellt wird.

3. Verfahren nach einem der Ansprüche 1 oder 2, **dadurch gekennzeichnet, dass** eine Selbstzentrierung der optischen Achse (7) innerhalb des Metallrohres (11) oder innerhalb der Muffe vorgesehen ist.

4. Verfahren nach einem der Ansprüche 1 bis 3, weiterhin umfassend eine Dunkelkalibrierung des Sensors.

5. Verfahren nach einem der Ansprüche 1 bis 4, **gekennzeichnet durch** eine Sensorkalibrierung mit einem Referenzbauteil.

6. Verfahren nach einem der Ansprüche 1 bis 5 **gekennzeichnet durch** eine Verschmutzungskontrolle durch Vergleich der von dem optischen Sensor erfassten Lichtstärkesignale.

7. Verfahren nach einem der Ansprüche 1 bis 6, **dadurch gekennzeichnet, dass** die von dem Sensor erfassten Messdaten zur Ableitung von Steuerbefehlen für eine Steuerung und/oder Regelung einer Werkzeugmaschine verwendet werden, die zur Herstellung eines Innengewindes (12) an wenigstens einem Ende wenigstens eines Metallrohres (11) oder in einer Muffe durch spanende Bearbeitung ausgebildet ist.

8. Verfahren nach einem der Ansprüche 1 bis 7, **gekennzeichnet durch** die Verwendung einer Anordnung (1) zur optischen Vermessung eines Gewindes, insbesondere zur Vermessung eines Innengewindes (12) an einer Muffe oder an einem Muffenende eines Metallrohres (11), umfassend wenigstens einen optischen Sensor (5), wenigstens ein weiteres optisches Element, das relativ zu dem optischen Sensor (5) verstellbar ist und das mit einem bestimmten Abstand zu dem Sensor in einer optischen Achse (7) auf einer optischen Bank (3) angeordnet und zur optischen Abtastung des Innengewindes (12) ausgebildet ist, sowie umfassend Mittel zur Erfassung und/oder Speicherung und/oder Auswertung der von dem Sensor aufgenommenen Messdaten der Anordnung (1) weiterhin umfassend wenigstens ein Gestell (2), das die optische Bank (3) aufnimmt, wobei die optische Bank (3) und/oder das Gestell (2) wenigstens linear in der Längsachse oder parallel zu einer Längsachse des Metallrohres (11) verstellbar sind, der Sensor als konfokaler Sensor ausgebildet ist, das optische Element wenigstens einen um wenigstens eine, vorzugsweise um zwei Achsen verstellbaren Spiegel (9) umfasst und das optische Element als Galvo-Scanner (6) ausgebildet ist.

## Claims

1. Method for optical measurement of an internal thread (12) at a sleeve or a sleeve end of a metal tube (11), wherein the method comprises the following steps:
A) providing an optical system with at least one optical sensor (5) and at least one further optical element, which are arranged on an optical axis (7) at a defined mutual spacing,
B) adjusting the optical system in the longitudinal axis of the metal tube (11) or the sleeve or parallelly to the longitudinal axis of the metal tube (11) or the sleeve, preferably within the metal tube (11), or adjusting the metal tube (11) relative to the system, which is arranged in a fixed location, in the longitudinal axis or parallelly to the longitudinal axis of the metal tube (11) or the sleeve,
C) scanning the internal thread (12) during a linear adjustment of the optical system and/or during a rotation of the optical element at an angle to the optical axis (7) and
D) detecting and/or storing and/or processing the measurement values detected by the sensor,
**characterised in that**
the optical system comprises at least one galvo-scanner (6), which during a linear adjustment of the optical system scans at least a part circumference of the internal thread (12), and multiple scanning of the internal thread by the galvo-scanner with different anglings of the light is provided and the signals of a plurality of scans are superimposed.

2. Method according to claim 1, **characterised in that** the contour of the thread flights is detected and/or illustrated.

3. Method according to one of claims 1 and 2, **characterised in that** self-centring of the optical axis (7) within the metal tube (11) or within the sleeve is provided.

4. Method according to any one of claims 1 to 3, further comprising darkness calibration of the sensor.

5. Method according to any one of claims 1 to 4, **characterised by** sensor calibration with a reference component.

6. Method according to any one of claims 1 to 5, **characterised by** a contamination check by comparison of the light intensity signals detected by the optical sensor.

7. Method according to any one of claims 1 to 6, **characterised in that** the measurement data detected by the sensor are used for derivation of control commands for control and/or regulation of a machine tool which is constructed for producing an internal thread (12) at at least one end of at least one metal tube (11) or in a sleeve by material-removal processing.

8. Method according to any one of claims 1 to 7, **characterised by** use of an arrangement (1) for optical measurement of a thread, particularly for measurement of an internal thread (12) at a sleeve or a sleeve end of a metal tube (11), comprising at least one optical sensor (5), at least one further optical element, which is adjustable relative to the optical sensor (5) and which is arranged at a defined spacing from the sensor on an optical axis (7) on an optical bank (3) and constructed for optical scanning of the internal thread (12), as well as comprising means for detecting and/or storing and/or evaluating the measurement data, which are recorded by the sensor, of the arrangement (1), further comprising at least one frame (2) which receives the optical bank (3), wherein the optical bank (3) and/or the frame (2) is or are adjustable at least linearly in the longitudinal axis or parallelly to a longitudinal axis of the metal tube (11), the sensor is constructed as a confocal sensor, the optical element comprises at least one mirror (9) adjustable about at least one axis, preferably about two axes, and the optical element is constructed as a galvo-scanner.

## Revendications

1. Procédé de mesure optique d'un filetage interne (12) sur un manchon ou à l'extrémité manchonnée d'un tube métallique (11), le procédé comprenant les étapes suivantes :
A) fournir un système optique avec au moins un capteur optique (5) et au moins un autre élément optique, disposés sur un axe optique (7) à une certaine distance l'un de l'autre,
B) déplacer le système optique sur l'axe longitudinal du tube métallique (11) ou du manchon, ou parallèlement à l'axe longitudinal du tube métallique (11) ou du manchon, de préférence à l'intérieur du tube métallique (11), ou déplacer le tube métallique (11) par rapport au système fixe sur l'axe longitudinal ou parallèlement à l'axe longitudinal du tube métallique (11) ou du manchon, et
C) balayer le filetage interne (12) pendant un déplacement linéaire du système optique et/ou lors d'une rotation de l'élément optique à un angle par rapport à l'axe optique (7), et
D) capturer et/ou stocker et/ou traiter les valeurs mesurées par le capteur,
**caractérisé en ce que** le système optique comprend au moins un galvanomètre (6), qui balaie au moins une portion de la circonférence du filetage interne (12) pendant un déplacement linéaire du système optique, et **en ce qu'**un balayage multiple du filetage interne avec différents angles de lumière à travers le galvanomètre est prévu et que les signaux de plusieurs balayages sont superposés.

2. Procédé selon la revendication 1, **caractérisé en ce que** le contour des filets est capturé et/ou représenté.

3. Procédé selon l'une des revendications 1 ou 2, **caractérisé en ce qu'**un auto-centrage de l'axe optique (7) à l'intérieur du tube métallique (11) ou à l'intérieur du manchon est prévu.

4. Procédé selon l'une des revendications 1 à 3, comprenant également un calibrage à l'obscurité du capteur.

5. Procédé selon l'une des revendications 1 à 4, **caractérisé par** un calibrage du capteur à l'aide d'un composant de référence.

6. Procédé selon l'une des revendications 1 à 5, **caractérisé par** un contrôle de contamination par comparaison des signaux d'intensité lumineuse capturés par le capteur optique.

7. Procédé selon l'une des revendications 1 à 6, **caractérisé en ce que** les données mesurées capturées par le capteur sont utilisées pour dériver des commandes de contrôle pour contrôler et/ou régler une machine-outil conçue pour produire un filetage interne (12) à au moins une extrémité d'au moins un tube métallique (11) ou dans un manchon par usinage par enlèvement de matière.

8. Procédé selon l'une des revendications 1 à 7, **caractérisé par** l'utilisation d'un dispositif (1) pour la mesure optique d'un filetage, en particulier pour la mesure d'un filetage interne (12) sur un manchon ou à l'extrémité manchonnée d'un tube métallique (11), comprenant au moins un capteur optique (5), au moins un autre élément optique réglable par rapport au capteur optique (5), disposé à une certaine distance du capteur sur un axe optique (7) sur une base optique (3) et conçu pour le balayage optique du filetage interne (12), ainsi que des moyens pour capturer et/ou stocker et/ou analyser les données mesurées par le capteur du dispositif (1), comprenant également au moins un cadre (2) qui supporte la base optique (3), dans lequel la base optique (3) et/ou le cadre (2) sont réglables au moins linéairement sur l'axe longitudinal ou parallèlement à un axe longitudinal du tube métallique (11), le capteur étant conçu comme un capteur confocal, l'élément optique comprenant au moins un miroir (9) réglable autour d'au moins un axe, de préférence autour de deux axes, et l'élément optique étant conçu comme un galvanomètre (6).
